# EUROPÄISCHE PATENTSCHRIFT

(11) **EP 1 452 357 B1**
(45) Veröffentlichungstag und Bekanntmachung des Hinweises auf die Patenterteilung: **11.05.2005**
(21) Anmeldenummer: 03004526.4
(22) Anmeldetag: 28.02.2003
(51) Int. Cl.: B60H 1/22, H05B 3/50

(54) **Elektrische Heizvorrichtung mit Heizzonen**
Electric heating device with heating zones
Appareil de chauffage électrique avec plusieurs zones de chauffage

(43) Veröffentlichungstag der Anmeldung: 01.09.2004
(73) Patentinhaber: Catem GmbH & Co.KG, 76863 Herxheim bei Landau/Pfalz (DE)
(72) Erfinder: Bohlender, Franz, 76870 Kandel (DE); Clauss, Maurice, 67150 Nordhause (FR); Niederer, Michael, 76889 Kapellen-Drusweiler (DE)
(74) Vertreter: Grünecker, Kinkeldey, Stockmair & Schwanhäusser Anwaltssozietät

(56) Entgegenhaltungen:
- EP-A- 1 157 867
- DE-A- 19 933 013
- FR-A- 2 742 384

## Beschreibung

Die Erfindung betrifft eine elektrische Heizvorrichtung für Kraftfahrzeuge. Insbesondere bezieht sich die Erfindung auf eine elektrische Heizvorrichtung mit einem Heizregister, das separat ansteuerbare Heizzonen aufweist.

Für den Einsatz in Kraftfahrzeugen, insbesondere solche mit verbrauchsoptimierten Verbrennungsmotoren, werden elektrische Heizvorrichtungen zur Beheizung von Innenraum und Motor verwendet. Solche elektrischen Heizvorrichtungen sind auch zur Raumklimatisierung, in Industrieanlagen, in Haushaltsgeräten usw. einsetzbar.

Der verbesserte Wirkungsgrad von verbrauchsoptimierten Verbrennungsmotoren bewirkt eine erhebliche Heizleistungsreduktion in Kraftfahrzeugen. Bei Fahrten im unteren Teillastbereich des Motors und bei niedrigen Außentemperaturen, beispielsweise im Winter, liefert der Motor nicht die Wärmemenge, die zum Heizen des Innenraums erforderlich ist. Zum Ausgleich eines solchen Wärmedefizits werden elektrische Zusatzheizungen verwendet, die im Allgemeinen in Kraftfahrzeugklimaanlagen integriert sind.

Über eine Mehrzonenklimatisierung des Kraftfahrzeuginnenraums kann jeder Fahrgast (Fahrer, Beifahrer und die Fondpassagiere) die Temperatur individuell und unabhängig voneinander einstellen. Zusätzliche Ausströmer lenken die Luft zum Defrosten auf die Fahrzeugscheiben.

Eine solche Mehrzonenklimatisierung, bei der jeder Fahrgast die Temperatur seines Platzes separat einstellen kann, wird heutzutage mit Hilfe von Wasser-Wärmetauschem realisiert. Ober eine Klappensteuerung ist der Anteil warmer Luft für den Luftstrom jeder Zone dosierbar. Herkömmliche elektrische Heizvorrichtungen (Zusatzheizer) werden eingesetzt, um bei ungenügender Wärmeabgabe des Wasser-Wärmetauschers den Luftstrom insgesamt, d.h. ohne Unterschied zwischen den einzelnen Teilluftströmen, aufzuheizen. Eine solche elektrische Zusatzheizung ist in EP-A-1 157 867 beschrieben.

Nachteilig an solchen herkömmlichen elektrischen Zusatzheizem und Kraftfahrzeugklimageräten ist, dass eine individuelle Wärmezufuhr separat zu den einzelnen "Zonen" nicht möglich ist. Eine geeignete Klimatisierung für jede Zone ist z.B. nur über eine entsprechende Klappensteuerung (Mischklappen für Warmluft/Kaltluft) zur Dosierung der Wärmzufuhr zu jeder Zone realisierbar. Daher wird bei ungleichmäßiger Anforderung von Heizleistung in den einzelnen Fahrzeugklimatisierungszonen ein Großteil der elektrischen Energie unnötig in Wärme umgesetzt und eine für jede Klimatisierungszone angepasste, feine Heizleistungssteuerung ist nicht möglich, insbesondere bei elektrischen Zusatzheizem mit besonders hoher Heizleistung (beispielsweise 2 kW).

FR-A-2 742 384 zeigt eine elektrische Heizung mit PTC-Heizelementen und Radiatorelementen. Die Heizung ist in vertikaler bzw. in horizontaler Richtung in verschiedene, separat ansteuerbare Zonen unterteilt um an entsprechenden Auslassöffnungen unterschiedlich erwärmte Luft bereitzustellen. Eine hinsichtlich horizontaler Ebenen von PTC-Heizelementen unterteilte Heizung besitzt Anschlüsse auf beiden Seiten der Heizung, um die jeweiligen Heizzonen mit Strom zu versorgen.

DE-A-199 33 013 zeigt ebenfalls eine elektrische Kfz-Heizung, die in vertikaler bzw. horizontaler Richtung in separat ansteuerbare Zonen unterteilt ist, zur Realisierung unterschiedlicher Beheizungszonen in einem Fahrzeug. Die Aufteilung der Heizungsfläche in Zonen erfolgt durch gegenseitige elektrische Isolierung der einzelnen Zonen.

Aufgabe der Erfindung ist es, eine elektrische Heizvorrichtung anzugeben, mit der eine Mehrzonenklimatisierung in einfacher Weise realisierbar ist.

Diese Aufgabe wird mit den Merkmalen des Anspruchs 1 für eine elektrische Heizvorrichtung gelöst.

Erfindungsgemäß ist in einer Ebene eine Mehrzahl von PTC-Heizelemente angeordnet, die in wenigstens zwei Gruppen separat voneinander ansteuerbar sind. Auf diese Weise ist die in einem Heizregister mit nur einem "Heizblock" aus PTC-Elementen und Radiatorelementen erzeugte Wärmemenge für benachbarte Bereiche separat dosierbar - ohne Klappensteuerung. Bei einer elektrischen Heizvorrichtung mit einem Heizregister aus einer Mehrzahl solcher Heizblöcke ist eine beliebige Aufteilung in Heizzonen realisierbar. Auf diese Weise lassen sich in einfacher Weise 2-Zonen-, 4-Zonen- oder sogar 6-Zonen-Klimatisierungen realisieren, so dass jeder Fahrgast die Temperatur seines Platzes individuell einstellen kann. Die individuelle Temperaturvorwahl für jede Zone führt zu einer entsprechenden Bereitstellung von Wärme nur über den jeweils zugeordneten Bereich des Heizregisters. Die vorliegende Erfindung ermöglicht daher in einfacher Weise eine Mehrzonenklimatisierung mittels einer elektrischen Heizvorrichtung. Die PTC-Elemente jeder Zone greifen dabei nur dann ein, wenn eine entsprechende Heizleistung angefordert ist.

Ein weiterer Vorteil der vorliegenden Erfindung liegt darin, dass die entsprechende Heizvorrichtung von ihren äußeren Abmessungen und Maßen zu bisherigen Heizvorrichtungen identisch ist, so dass sie ohne Änderungen in herkömmlich aufgebaute Klimageräte integrierbar ist.

Vorzugsweise ist jeder Gruppe von separat ansteuerbaren PTC-Heizelementen ein separates Radiatorelement zugeordnet. Eine Miterwärmung benachbarter Zonen kann dadurch effektiv vermieden werden.

Vorzugsweise wird jede Gruppe von separat ansteuerbaren PTC-Heizelementen über ein separates Kontaktblech mit Strom versorgt, wobei die Kontaktbleche jeweils in derselben Ebene angeordnet sind. Auf diese Weise lässt sich ohne äußere bauliche Veränderungen und ohne Einschränkung des Luftdurchsatzes eine separate Ansteuerung erzielen.

Bei zwei Gruppen von separat ansteuerbaren PTC-Elementen können die elektrischen Anschlüsse für die Kontaktbleche jeweils auf entgegengesetzten Schmalseiten angeordnet werden. Vorzugsweise werden die elektrischen Anschlüsse jeweils auf derselben Schmalseite vorgesehen, wobei die Stromzuführung zu den von den Anschlüssen her gesehen hinteren PTC-Heizelementen seitlich an dem vorderen Kontaktblech vorbeigeführt ist. Auf diese Weise kann ohne zusätzliche Einschränkungen des Luftdurchsatzes beiden Gruppen von Heizelementen Strom zugeführt werden. Eine zusätzliche Bauhöhe für die zusätzliche Ansteuerung einer separaten Gruppe von PTC-Heizelementen ist nicht erforderlich.

Vorzugsweise werden die PTC-Heizelemente von einem Positionsrahmen an vorbestimmten Positionen beabstandet zueinander gehalten. Der Positionsrahmen dient vorzugsweise zusätzlich der Positionierung der separaten Kontaktbleche und/oder der den einzelnen Gruppen von PTC-Heizelementen zugeordneten Radiatorelementen. Dazu weist der Positionsrahmen vorzugsweise eine Mehrzahl von aus dem Positionsrahmen ragenden Vorsprüngen auf. Damit lässt sich ein herkömmlicher Positionsrahmen in einfacher Weise zur Realisierung der erfindungsgemäß gestalteten elektrischen Heizvorrichtung modifizieren. Ein solcher Positionsrahmen benötigt nicht mehr Platz als ein herkömmlicher Positionsrahmen, so dass der Luftdurchsatz durch die zusätzliche Funktionalität nicht beeinträchtigt wird.

Gemäß einer weiter vorteilhaften Ausführungsform der Erfindung sind die Vorsprünge so ausgestaltet, dass die Radiatorelemente in einfacher Weise auf den Positionsrahmen aufclipsbar sind. Auf diese Weise lassen sich Heizelemente aus PTC-Heizelementen mit ihren entsprechenden Stromzuführungen, Positionsrahmen und Radiatorelementen in einfacher Weise vorfabrizieren. Auf diese Weise können die Herstellungskosten für eine elektrische Heizvorrichtung niedrig gehalten werden.

Vorzugsweise ist jeder Gruppe von PTC-Heizelementen, die separat ansteuerbar ist, eine eigene Steuervorrichtung zugeordnet. Auf diese Weise lässt sich eine Mehrzonenklimatisierung in einem Kraftfahrzeug in besonders einfacher Weise realisieren, bei der die für jede Zone erforderliche Heizleistung separat einstellbar ist. Beispielsweise kann jeder Fahrgast auf den Vordersitzen oder im Fond eine unterschiedliche Temperatur vorwählen, so dass jede Zone eine andere Wärmemenge abgibt.

Außerdem kann ein Zusammenführen der Luftkanäle aller Heizzonen für eine schnelle Defrostung der Fahrzeugscheiben vorgesehen sein.

Gemäß einer besonderen Ausführungsform der vorliegenden Erfindung weist die Gruppe von PTC-Heizelementen, die von elektrischen Anschlüssen der Kontaktbleche weiter entfernt angeordnet ist, eine geringere Anzahl von PTC-Heizelementen auf. Die Breite des an dem Kontaktblech für die vordere Gruppe von PTC-Heizelementen vorbeigeführten Kontaktblechs, das Strom der hinteren Gruppe zuführt, kann aufgrund der geringeren Strommenge besonders schmal ausgeführt werden. Eine erforderliche zusätzliche Bautiefe der Heizvorrichtung kann auf diese Weise besonders gering ausfallen oder sogar ganz vermieden werden.

Weitere vorteilhafte Ausgestaltungen der Erfindung sind Gegenstand der Unteransprüche.

Die Erfindung wird nachfolgend unter Bezugnahme auf die beiliegenden Figuren beschrieben, in denen:
- Fig. 1a: eine Seitenansicht einer erfindungsgemäßen elektrischen Heizvorrichtung zeigt,
- Fig. 1b: eine Aufsicht auf die erfindungsgemäße elektrische Heizvorrichtung zeigt,
- Fig. 2: ein herkömmliches, in einem Kraftfahrzeug eingebautes Klimagerät zeigt,
- Fig. 3: eine perspektivische Ansicht eines Heizelementes aus dem Heizregister der erfindungsgemäßen Heizvorrichtung zeigt,
- Fig. 4: eine Schnittansicht durch das in Fig. 3 gezeigte Heizelement zeigt,
- Fig. 5: eine Aufsicht auf die erfindungsgemäße elektrische Heizvorrichtung für eine Mehrzonenklimatisierung zeigt,
- Fig. 6a: eine Aufsicht auf die erfindungsgemäße elektrische Heizvorrichtung für eine zu Fig. 5 alternative Mehrzonenklimatisierung zeigt,
- Fig. 6b: eine Seitenansicht zu der in Fig. 6a gezeigten elektrischen Heizvorrichtung zeigt,
- Fig. 7: eine perspektivische Ansicht der Heizvorrichtung gemäß Fig. 6 zeigt, bei der zur Verdeutlichung des Prinzips die Elemente der Heizvorrichtung nur teilweise dargestellt sind,
- Fig. 8: eine Detailansicht der Heizvorrichtung gemäß Fig. 7 zeigt, die die alternative Stromzuführung verdeutlicht, und
- Fig. 9: eine perspektivische Ansicht eines Ausschnitts aus dem Heizregister der Heizvorrichtung in Form einer Explosionsdarstellung der alternativen Ausführungsform gemäß Fig. 6 eines Ausschnitts aus dem Heizregister der Heizvorrichtung zeigt.

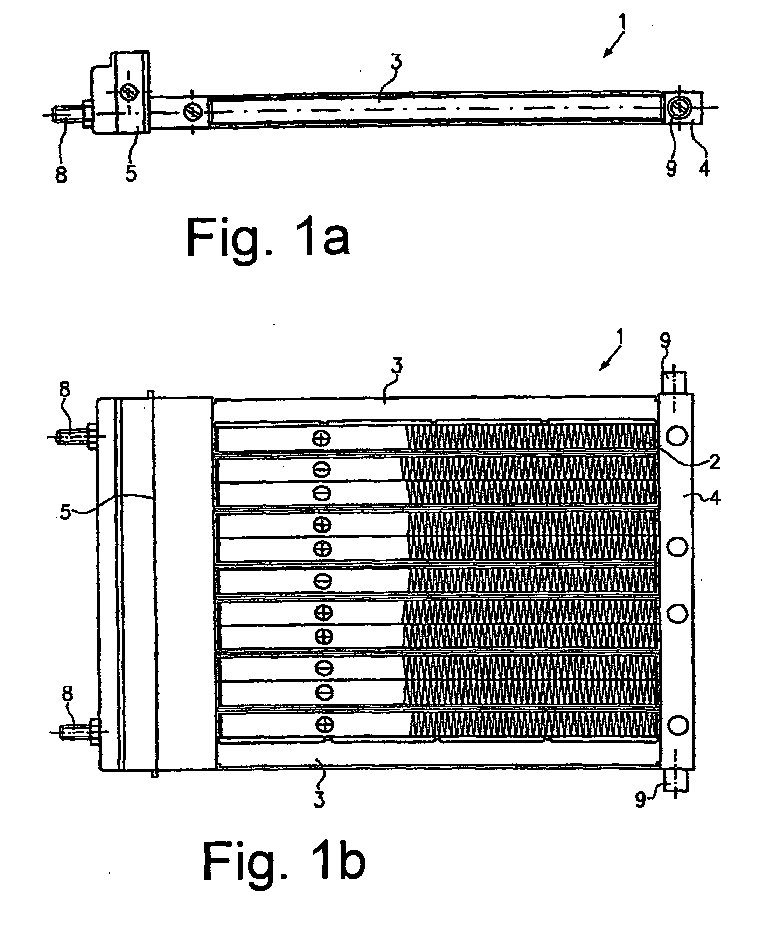

Der Aufbau einer elektrischen Heizvorrichtung, die insbesondere für den Einsatz in Kraftfahrzeugen geeignet ist, ist in Fig. 1a und Fig. 1b dargestellt. Während Fig. 1b eine Aufsicht auf die elektrische Heizvorrichtung wiedergibt, ist in Fig. 1a eine Seitenansicht dargestellt. Die elektrische Heizvorrichtung 1 weist ein Heizregister auf, das aus einer Mehrzahl geschichteter oder gestapelter Heizelemente besteht. Jedes Heizelement besteht aus wenigstens einem Widerstandsheizelement und benachbart zu diesen angeordneten Radiatorelementen oder Wärmeleitblechen. Als Widerstandsheizelement werden vorzugsweise PTC-Heizelemente verwendet.

Das Heizregister ist in einem Rahmen gehalten, der aus gegenüberliegend angeordneten Längsholmen 3 und senkrecht zu diesen angeordneten Seitenholmen 4 und 5 besteht. Die Rahmenholme sind aus Metall oder Kunststoff gefertigt.

Die Längsholme sind im Wesentlichen gleich aufgebaut. Die gegenüberliegenden Seitenholme 4 und 5 unterscheiden sich jedoch darin, dass der Seitenholm 5 als einseitig offener Kasten ausgebildet ist. Die Öffnung dieses kastenförmigen Seitenholms 5 liegt auf der den Heizelementen gegenüberliegenden Seite. In diesem Kasten ist eine Steuervorrichtung einsetzbar, die die Wärmeabgabe der einzelnen Heizzonen über eine Regelung des zugeführten Stroms steuert. Die offene Seite des als Kasten ausgebildeten Seitenholms 5 wird nach dem Einsetzen der Steuervorrichtung mit einem aufsteckbaren oder aufclipsbaren Deckel verschlossen.

Diese Steuervorrichtung ist vorzugsweise als Platine mit einer Mehrzahl von Leistungshalbleiterbauelementen realisiert. Die Platine ist nach dem Einsetzen in den kastenförmigen Seitenholm 5 vorzugsweise senkrecht zur Rahmenebene angeordnet. Der von der Steuervorrichtung auf die einzelnen Heizzonen aufgeteilte Strom wird über zwei Anschlussbolzen 8 zugeführt. Diese sind so ausgebildet, dass sie die geforderten Heizströme problemlos leiten können. Zusätzlich ist der Seitenholm 5 mit einem Steckersockel zur Ansteuerung der Steuervorrichtung ausgestattet. Vorzugsweise werden der Steuervorrichtung zur Ansteuerung der PTC-Heizelemente Signale über einen Kraftfahrzeugbus zugeführt.

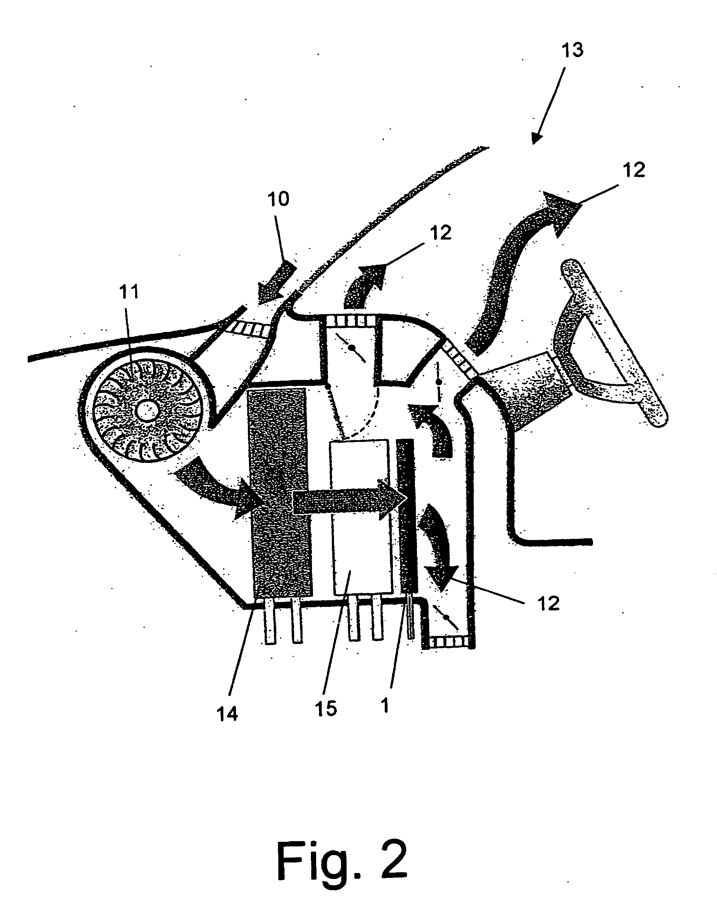

Den Einsatz von elektrischen Zusatzheizem in einem Klimagerät (ohne Mehrzonenheizung) ist in Fig. 2 dargestellt. Das Klimagerät saugt Außenluft 10 über ein Gebläse 11 an, die über eine elektrische Heizvorrichtung 1 dem Innenraum zugeführt wird. Dabei durchströmt die Luft zuvor einen Verdampfer 14 und einen Wasserwärmetauscher 15. Anschließend strömt die erwärmte Luft 12 über entsprechende Ausströmer in den Kraftfahrzeuginnenraum 13.

Für eine Mehrzonenklimatisierung wird die erwärmte Luft 12 über ein entsprechendes Kanalsystem jeweils vorbestimmten Ausströmern zugeführt. Somit ist die über die Kanäle Luft den Ausströmem zugeführte Luft jeweils individuell auf eine bestimmte Temperatur erwärmbar.

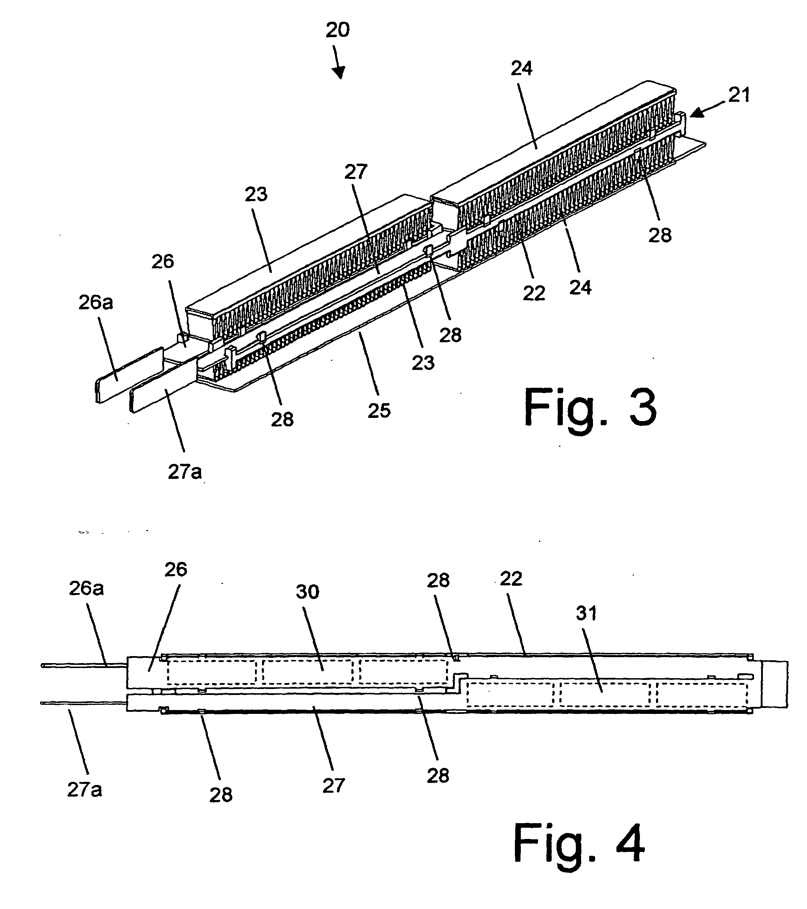

Das Heizregister der erfindungsgemäßen Heizvorrichtung besteht vorzugsweise aus einer Vielzahl von Radiatorelementen mit benachbart zu diesen angeordneten PTC-Heizelementen. Ein "Grundelement" 20 eines solchen geschichteten Aufbaus ist in Fig. 3 wiedergegeben. Zwischen Radiatorelementen 23, 24 befindet sich eine Schicht 21 mit PTC-Heizelementen und diesen zugeordneten Stromzuführungen 26, 27. Die beiden Stromzuführungen 26, 27 ermöglichen eine separate Ansteuerung von zwei Gruppen von PTC-Heizelementen. Ein gemeinsames weiteres Kontaktblech 25 für alle PTC-Heizelemente ist auf der Unterseite der Radiatorelemente 23, 24 vorgesehen. Das Kontaktblech 25 kann alternativ auch auf der den Kontaktblechen 26, 27 gegenüberliegenden Seite des Positionsrahmens angeordnet sein.

Die separate Stromzuführung zu verschiedenen Gruppen der PTC-Heizelemente ist im Einzelnen in Fig. 4 dargestellt. Ein erstes Kontaktblech 26 kontaktiert die PTC-Heizelemente 30, die eine erste Gruppe von PTC-Heizelementen bilden. Ein zweites Kontaktblech 27 führt Strom einer zweiten Gruppe von PTC-Heizelementen 31 zu. Beide Kontaktbleche sind an einem Ende in Längsrichtung mit elektrischen Anschlüssen 26a, 27a versehen. Über eine solche Anordnung können die hintereinander liegenden Gruppen von PTC-Heizelementen 30, 31 über eine gemeinsame Steuervorrichtung mit Strom versorgt werden.

Um der hinteren Gruppe von PTC-Heizelementen 31 Strom über den Anschluss 27a zuzuführen, wird das Kontaktblech 27 seitlich an dem Kontaktblech 26 vorbeigeführt. Dazu ist dieses Kontaktblech vorzugsweise schmaler als im Bereich der mit Strom zu versorgenden PTC-Heizelemente 31 ausgeführt.

Gemäß einer besonderen Ausführungsform der vorliegenden Erfindung sind die PTC-Heizelemente 30, 31 entsprechend zur Lage der Kontaktbleche 26, 27 versetzt angeordnet. Vorzugsweise sind dementsprechend auch die den jeweiligen PTC-Heizelementen 30, 31 zugeordneten Radiatorelemente 23, 24 versetzt angeordnet. Eine solche Ausgestaltung ist in Fig. 3 perspektivisch dargestellt. Gemäß einer alternativen Anordnung sind die PTC-Heizelemente und Radiatorelemente ohne Versatz angeordnet.

Die PTC-Heizelemente 30, 31 der ersten und zweiten Gruppe werden von einem gemeinsamen Positionsrahmen 22 beabstandet zueinander an vorbestimmten Positionen gehalten. Der Positionsrahmen 22 ist dazu vorzugsweise aus Kunststoff mit entsprechenden Aussparungen gefertigt. Zur Kontaktierung der PTC-Heizelemente 30, 31 sind diese beidseitig mit Kontaktblechen 25, 26, 27 kontaktiert. Alternativ kann die Stromzuführung auch über dazwischenliegende, elektrisch leitende Radiatorelemente 23, 24 erfolgen.

Erfindungsgemäß ist der Positionsrahmen so ausgestaltet, dass zumindest die Kontaktbleche 26, 27 ebenfalls beabstandet zueinander auf dem Positionsrahmen 22 gehalten werden. Dazu ist dieser mit Stegen, Rippen und Vorsprüngen für eine lagegenaue Positionierung der stromführenden Elemente versehen. Die Kontaktbleche 26, 27 werden durch die Vorsprünge des Positionsrahmens beabstandet zueinander gehalten.

Gemäß einer besonderen Ausführungsform der Erfindung ist der Positionsrahmen so ausgestaltet, dass auch die Radiatorelemente 23, 24 über die Vorsprünge 28 lagegenau auf dem Positionsrahmen 22 gehalten werden. Der Positionsrahmen 22 ist daher so ausgebildet, dass er zumindest alle stromführenden Elemente 23, 24, 26, 27 auf der Seite der PTC-Heizelemente 30, 31, auf der diese über separate Kontaktbleche mit Storm versorgt werden, elektrisch isoliert voneinander hält.

Vorzugsweise werden auch die Radiatorelemente 23, 24, die sich auf der gegenüberliegenden Seite befinden, über entsprechende Vorsprünge 28 des Positionsrahmens 22 gehalten, damit sie jeweils für einen guten Wärmeübergang direkt benachbart zu den entsprechenden PTC-Heizelementen 30, 31 angeordnet sind.

Gemäß einer weiteren besonderen Ausführungsform der Erfindung sind die Vorsprünge 28 des Positionsrahmens 22 so ausgebildet, dass die Radiatorelemente 23, 24 auf den Positionsrahmen aufclipsbar sind. Ein solcher Positionsrahmen ermöglicht eine einfache Fertigung eines in Fig. 3 gezeigten Heizelementes 20, so dass eine Endmontage einer erfindungsgemäßen elektrischen Heizvorrichtung in einfacher Weise über vorfabrizierte Heizelemente 20 erfolgen kann.

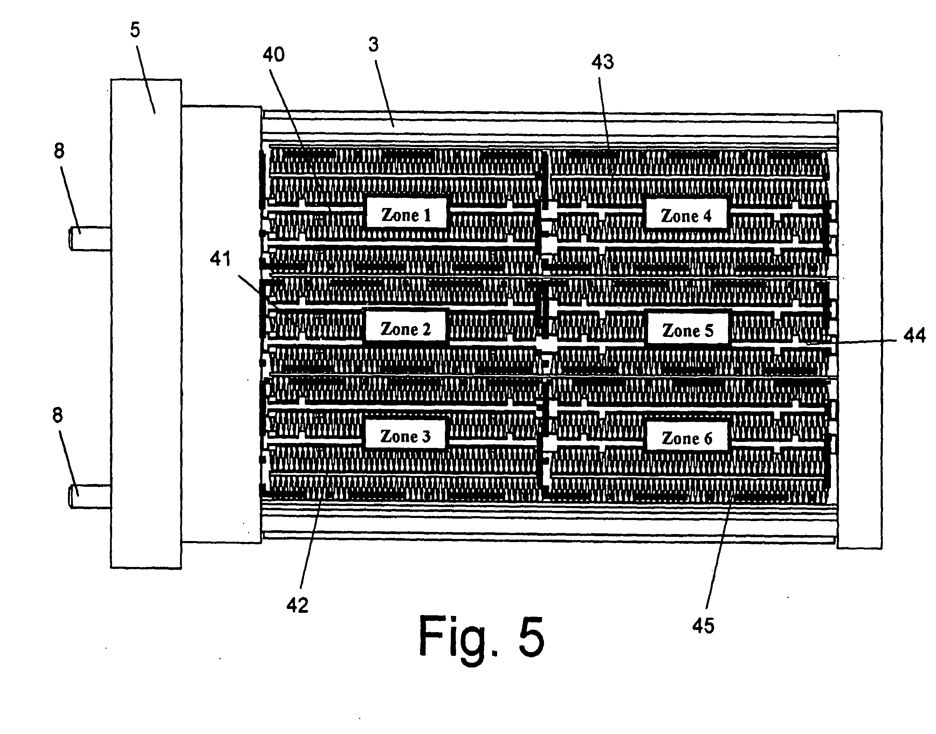

Eine solche elektrische Heizvorrichtung ist in Fig. 5 in Aufsicht wiedergegeben. Diese Heizvorrichtung entspricht der Darstellung aus Fig. 1 b, wobei zusätzlich die einzelnen Heizzonen für eine einer Vielzahl möglicher Varianten angegeben sind. Das Heizregister ist dazu in horizontaler und vertikaler Richtung unterteilt. Jede der Heizzonen wird über ein entsprechendes Steuerelement, d.h. einen entsprechenden Leistungstransistor der Steuereinheit, separat mit Strom versorgt.

Obwohl in Fig. 5 die Zonen 40 bis 45 eine in etwa gleiche Größe aufweisen, können sie jedoch auch unterschiedlich ausgestaltet sein.

Eine Mehrzahl von Zonen/Heizbereichen des Heizregisters kann einer davon unabhängigen, eventuell verschiedenen Anzahl von Klimazonen über entsprechende Luftkanäle zugeordnet werden. Beispielsweise können bei der in Fig. 5 gezeigten Aufteilung in sechs Zonen zwei Zonen dem Fahrer, zwei dem Beifahrer und jeweils eine den Fondpassagieren zugeordnet werden. Bei einer 2-Zonenklimatisierung des Kraftfahrzeugs kann eine symmetrische Aufteilung mit jeweils drei Zonen des Heizregisters zu einer Klimazone des Kraftfahrzeuginnenraums erfolgen. Die auf der Stirnseite im Seitenholm 5 angeordnete Steuervorrichtung ist dazu sechsstufig ausgebildet, so dass jede der Zonen separat ansteuerbar ist.

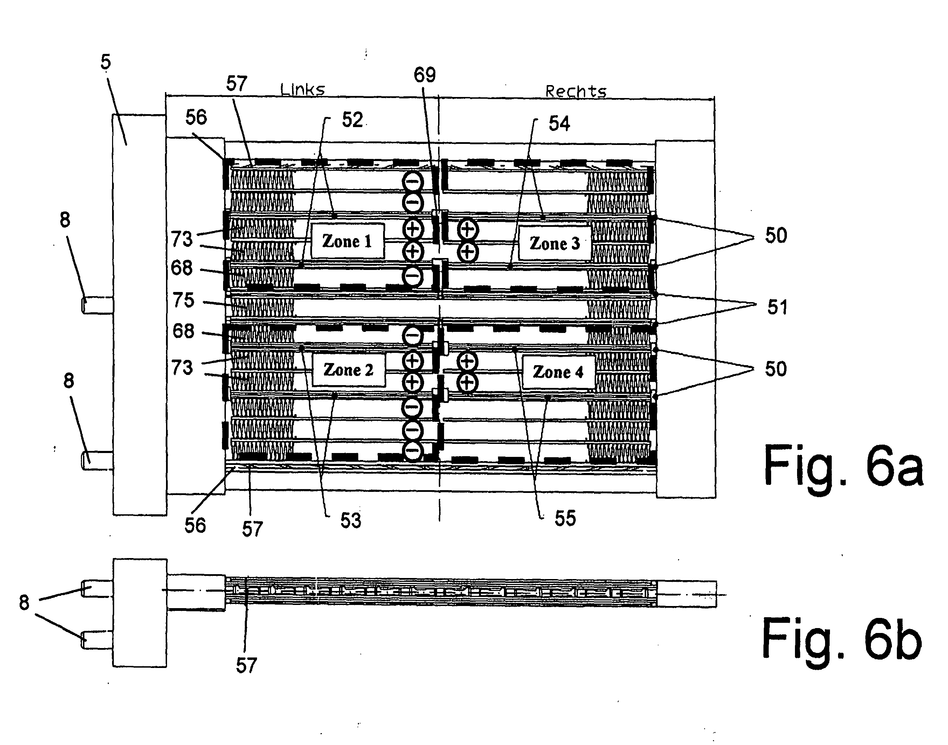

Ein alternativer Ansatz zur Zuführung von Strom zu der zweiten Gruppe von PTC-Heizelementen 31 ist in den Figuren 6 bis 9 dargestellt. Diese Ausführungsform unterscheidet sich von den vorherigen im Wesentlichen dadurch, dass die Radiatorelemente und PTC-Heizelemente der verschiedenen Heizzonen ohne Versatz zueinander angeordnet sind. Dadurch ist die Heizvorrichtung trotz einer Mehrzahl von separat ansteuerbaren Heizzonen besonders schmalbauend. Zu diesem Zweck wird der Strom, vorzugsweise der Plus-Kontakt, der der von der Steuervorrichtung her gesehen hinteren Gruppe von Heizelementen 31 zugeführt wird, über eine separate Stromzuführung in einer anderen Ebene als die Ebene der PTC-Heizelemente zugeführt.

In Fig. 6a ist ein Beispiel für verschiedene Heizzonen 52 bis 55 dargestellt. In diesen Heizzonen sind Ebenen 50 angeordnet, in denen sich die PTC-Heizelemente 30, 31 befinden. Dadurch, dass die PTC-Heizelemente 30, 31 in der linken und rechten Hälfte des Heizregisters jeweils separat ansteuerbar sind, können nebeneinander angeordnete Heizzonen 52 bis 55 realisiert werden. Der Strom zur Ansteuerung der PTC-Heizelemente 31 der rechten Hälfte mit den Zonen 54 und 55 wird über entsprechende Stromzuführungen in den Ebenen 51 bewerkstelligt.

Die dargestellte Anordnung der Ebenen 50 und 51 ist nur beispielhaft und eine beliebige andere Anordnung ist ebenso gut möglich. Beispielsweise können die Ebenen 51 jeweils auch am oberen und unteren Rand der Heizvorrichtung angeordnet werden.

Die Klemmpressung des geschichteten Aufbaus aus PTC-Heizelementen, Radiatorelementen und Kontaktblechen erfolgt über Federn 56 mit einzelnen Federelementen 57. Im dargestellten Ausführungsbeispiel sind am oberen und unteren Rand der Anordnung jeweils entsprechende Federn 56 vorgesehen. Alternativ kann auch eine einzige Feder 56 den Anpressdruck erzeugen. Vorzugsweise sind die einzelnen Federelemente 57, wie in Fig. 6b gezeigt, jeweils an Positionen angeordnet, die denen der PTC-Heizelemente 30, 31 in den Ebenen 50 entsprechen.

Obwohl in den entsprechenden Figuren nicht gezeigt, sind diese Federn 56 mit Federelementen 57 auch in den zuvor beschriebenen Ausführungsformen vorhanden.

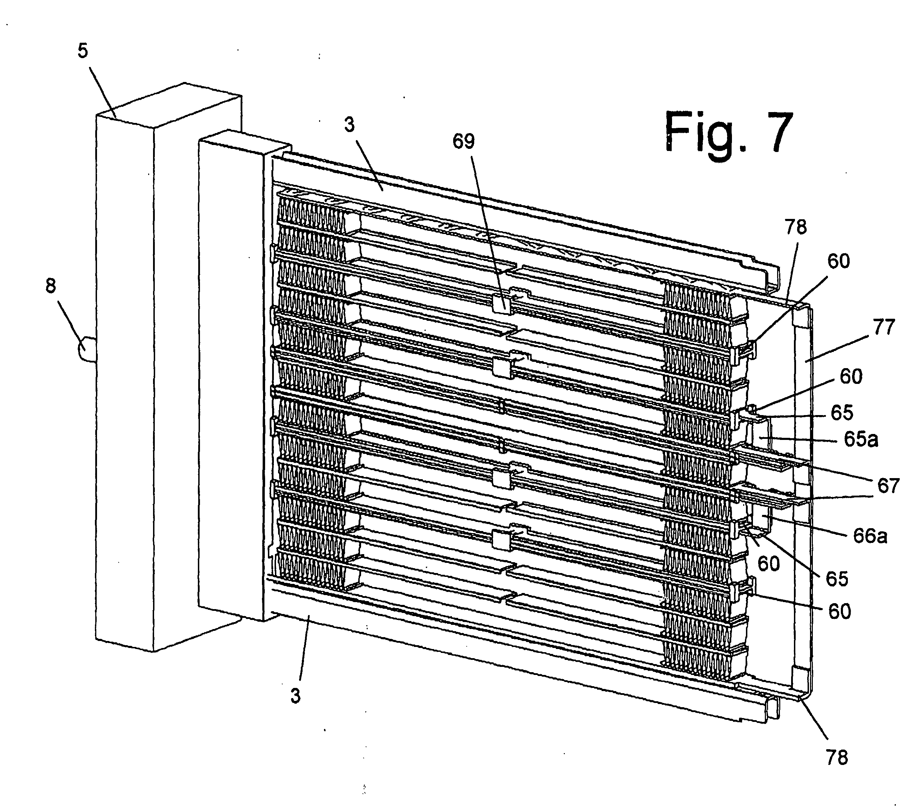

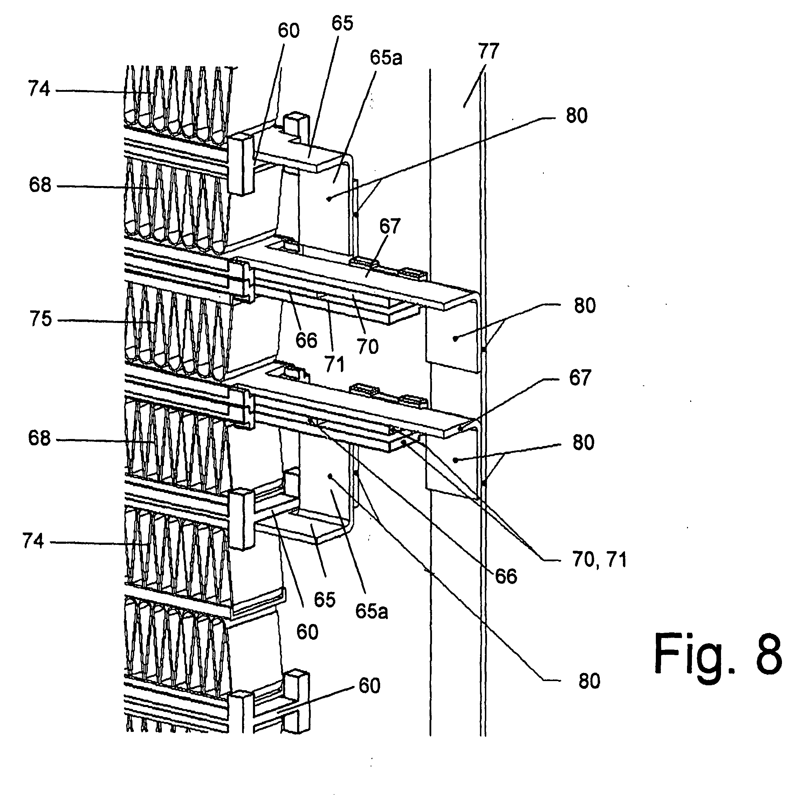

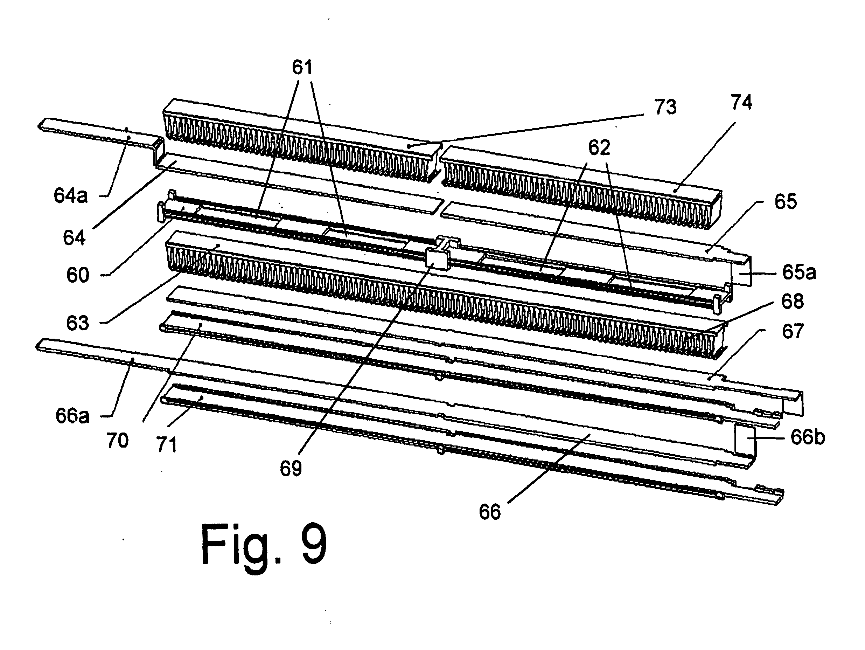

Eine spezielle Realisierung der alternativen Ausführungsform wird nachfolgend unter Bezugnahme auf die Figuren 7, 8 und 9 beschrieben. In diesen Figuren sind die Elemente einer entsprechenden Heizvorrichtung perspektivisch dargestellt. Fig. 7 zeigt eine Gesamtansicht einer entsprechenden elektrischen Heizvorrichtung, wobei zur besseren Verdeutlichung des Bauprinzips die Elemente der Heizvorrichtung teilweise weggelassen wurden. Insbesondere sind die Radiatorelemente nur angedeutet. Fig. 8 zeigt ein besonders relevantes Detail dieser Realisierung und Fig. 9 eine Explosionsdarstellung eines Heizelementes der Heizvorrichtung.

In den Ebenen 50 der Fig. 6 sind jeweils Positionsrahmen 60 angeordnet, die Aussparungen 61, 62 für die PTC-Heizelemente 30, 31 aufweisen. Auf ihrer Unterseite sind die PTC-Heizelemente über ein Kontaktblech 63 mit Masse kontaktiert. Auf der Oberseite werden beide Gruppen von PTC-Heizelementen 30, 31 jeweils separat von Plus-Kontaktblechen 64, 65 kontaktiert.

Zur beabstandeten Anordnung dieser Kontaktbleche sind die Positionsrahmen 60 jeweils mit einem Trennelement 69 versehen. Dieses senkrecht aus dem Positionsrahmen herausragende Trennelement 69 hält nicht nur die Kontaktbleche 64, 65, sondern vorzugsweise auch die entsprechend zu diesen benachbart angeordnete Radiatorelemente 73, 74 beabstandet zueinander.

Gemäß Fig. 7 ist die Steuervorrichtung in dem Seitenholm 5 angeordnet. Der ersten Gruppe von PTC-Heizelementen 30 wird der entsprechende Steuerstrom über das Kontaktblech 64 und einen in Richtung der Steuervorrichtung ragenden Anschluss 64a zugeführt.

Alternativ zur ersten Ausführungsform mit einem Versatz der Kontaktbleche wird in dieser Ausführungsform den PTC-Heizelementen 31, die auf der rechten Seite des Heizregisters angeordnet sind, der Strom über das Kontaktblech 65 und eine in einer von dieser verschiedenen Ebene des Heizregisters angeordneten Stromzuführung 66 zugeführt. Die Stromzuführung 66 weist einen Anschluss 66a auf, der mit der Steuervorrichtung im Seitenholm 5 verbunden ist und am anderen schmalseitigen Ende des Heizregisters eine Anschlusslasche 66b. Die Anschlusslasche ragt 66b vertikal in Richtung der Ebene mit den PTC-Heizelementen. Das Kontaktblech 65 weist eine entsprechende Anschlusslasche 65a auf, die entgegengesetzt in Richtung auf die Stromzuführung 66 ragt. Beide Anschlusslaschen 65a, 66b werden vorzugsweise über eine Schweißverbindung 80 miteinander verbunden.

Gemäß einer besonders bevorzugten Realisierung dient diese Plus-Stromzuführung 66 nicht allein der Stromzuführung zu den PTC-Heizelementen 31, die in den Aussparungen 62 angeordnet sind, sondern zusätzlich zur Stromzuführung zu entsprechend angeordneten PTC-Heizelementen in einer weiteren Ebene, die beispielsweise oberhalb angeordnet ist. Zu diesem Zweck ist das Kontaktblech 65 (und ebenfalls das Kontaktblech 64) mit den darüber liegenden Radiatorelementen 73, 74 elektrisch verbunden, so dass auch über mehrere Schichten von Radiatorelementen ein elektrischer Kontakt zu einer weiteren Schicht von PTC-Heizelementen hergestellt wird. Dieser Schicht von Heizelementen wird Masse von der gegenüberliegenden Seite über eine Stromzuführung 78 zugeführt.

Die parallel zur Plus-Stromführung 66 geführte Massezuführung 67 verbindet das Kontaktblech 63 über das Radiatorelement 68 mit Masse. Vorzugsweise ist das Kontaktblech 67 nicht über die Steuereinrichtung mit Masse verbunden, sondern über eine Querverbindung/-strebe 77 mit den in Rahmennähe angeordneten Masse-Zuführungen 78.

Damit in den Ebenen 51 die Plus-Stromzuführung zu den Kontaktblechen 65 über die Stromzuführung 66 und die Massezuführung 67 zu allen PTC-Elementen 30, 31 in den Aussparungen 61, 62 geführt werden kann, sind zusätzliche Isolierplatten 70, 71 vorgesehen. Die Isolierplatte 70 isoliert die Massezuführung 67 und die Plus-Stromzuführung 66 voneinander. Das Kontaktblech 71 isoliert die Plus-Stromzuführung 66 von dem darunter liegenden Radiatorelement 75.

Über die Isolierplatte 71 können auf der anderen Seite des stromlosen Radiatorelementes 75 symmetrisch dazu angeordnete Heizzonen 53, 55 in entsprechender Weise vorgesehen sein.

Über die besondere Realisierung, die in den Figuren 6 bis 9 dargestellt ist, ergibt sich die Plus- bzw. Massezuordnung, wie sie über die Plus- und Minus-Symbole in Fig. 6a dargestellt ist. Das zwischen den oberen und unteren Heizzonen liegende Radiatorelement 75 ist über die Kontaktplatten 71 weder von Masse noch von einer Plus-Stromzuführung kontaktiert und somit stromlos. Die dazu benachbarten Radiatorelemente 68 sind jeweils mit der Massezuführung 67 kontaktiert und führen die Masse zu einer Seite der PTC-Heizelemente 30, 31, und zwar ohne eine Unterscheidung zwischen beiden PTC-Heizelementgruppen zu treffen.

Die Radiatorelemente 75 und 68, d.h. die Radiatorelemente, die nicht der separaten Stromzuführung zu den verschiedenen Gruppen von PTC-Heizelementen diene, (d.h. die Radiatorelemente, die mit Masse verbunden oder stromlos sind) müssen nicht für die linke und rechte Hälfte des Heizregisters separat vorgesehen werden. Vorzugsweise werden diese Radiatorelemente durchgängig/einstückig ausgebildet. Alternativ können diese Heizelemente aber auch entsprechend getrennt voneinander vorgesehen sein, um eine bessere thermische Trennung der Heizzonen voneinander zu erreichen.

Mit den auf der zur Massezuführung gegenüberliegenden Seite der PTC-Heizelemente 30, 31 angeordneten Kontaktblechen 64, 65 sind die zu diesen benachbart angeordneten Radiatorelemente 73, 74 elektrisch verbunden. Sie führen den Strom einer darüber liegenden weiteren Schicht 50 mit PTC-Heizelementen der jeweils selben Zone zu. Die weitere. Schicht 50 mit PTC-Heizelementen derselben Zone ist über die darüber liegenden Radiatorelemente mit Masse kontaktiert. Die entsprechende Polarität der einzelnen Radiatorelemente und ihre separate Anordnung ist über entsprechende Plus- und Minuszeichen in Fig. 6a dargestellt.

Es ist der besondere Vorteil dieser Ausführungsform, dass sie im Gegensatz zu der ersten Ausführungsform noch schmalbauender ist.

Während bei herkömmlichen Mehrzonenheizungen für jeden Ausströmkanal eine separate Heizvorrichtung erforderlich ist, kann erfindungsgemäß eine einzige, zentrale Heizvorrichtung verwendet werden, die über separat ansteuerbare Heizbereiche die jeweils notwendige Wärme erzeugt. Auf diese Weise kann in einfacher Weise ein hoher Klimakomfort in einem Kraftfahrzeug erzielt werden.

Die Ausbildung von Zonen in dem Heizregister kann sowohl in Längsrichtung beliebig erfolgen, indem jeder Zone eine individuelle Anzahl von PTC-Heizelementen zugeordnet wird. In vertikaler Richtung ist die Größe einer Zone über eine variable Zuordnung von Radiatorelementen möglich.

Zusammenfassend betrifft die Erfindung eine elektrische Heizvorrichtung, die insbesondere als elektrische Zusatzheizung für Kraftfahrzeuge einsetzbar ist. Die Heizvorrichtung weist eine Mehrzahl von PTC-Heizelementen auf, die in einer Ebene der Heizvorrichtung angeordnet sind. Die PTC-Heizelemente sind elektrisch mit Kontaktblechen zur Stromzuführung kontaktiert und thermisch mit Radiatorelementen zur Abgabe der erzeugten Wärme an einen zu erwärmenden Luftstrom. Erfindungsgemäß sind die in dieser Ebene angeordneten PTC-Heizelemente wenigstens in zwei Gruppen separat ansteuerbar.

Eine solche Heizvorrichtung weist bei mit zu herkömmlichen elektrischen Heizvorrichtungen identischen Abmessungen und entsprechend gleicher Effizienz eine zusätzliche Funktionalität durch eine zonenweise Ansteuerbarkeit der Heizelemente auf.

## Patentansprüche

1. Elektrische Heizvorrichtung, insbesondere als elektrische Zusatzheizung für Kraftfahrzeuge, mit einer Mehrzahl von PTC-Heizelementen (30, 31), die in einer Ebene in der Heizvorrichtung angeordnet sind, wenigstens einem Radiatorelement (23, 24; 68, 73, 74, 75), und Kontaktblechen (26, 27; 64, 65) zur Kontaktierung der PTC-Heizelemente (30, 31), wobei die PTC-Heizelemente (30, 31) in wenigstens zwei Gruppen separat ansteuerbar sind,
**gekennzeichnet durch**
ein für jede Gruppe der separat ansteuerbaren PTC-Heizelemente (30, 31) separates Kontaktblech (26, 27; 64, 65) zur Stromzuführung,
wobei elektrische Anschlüsse (26a, 27a; 64a, 66a) zur Stromzuführung zu den separaten Kontaktblechen (26, 27; 64, 65) jeweils auf derselben Seite der Heizvorrichtung angeordnet sind.

2. Elektrische Heizvorrichtung nach Anspruch 1, **dadurch gekennzeichnet, dass** jeder der separat ansteuerbaren Gruppen von PTC-Heizelementen (30, 31) wenigstens ein separates Radiatorelement (23, 24; 73, 74) zugeordnet ist.

3. Elektrische Heizvorrichtung nach Anspruch 1 oder 2, **dadurch gekennzeichnet, dass** die separat ansteuerbaren Gruppen von PTC-Heizelementen (30, 31) über ein gemeinsames Kontaktblech (25) mit dem Pluspol oder mit Masse verbunden sind.

4. Elektrische Heizvorrichtung nach einem der Ansprüche 1 bis 3, **dadurch gekennzeichnet, dass** die separaten Kontaktbleche (26, 27; 64, 65) zur Ansteuerung der PTC-Heizelemente (30, 31) beabstandet zueinander in einer Ebene angeordnet sind.

5. Elektrische Heizvorrichtung nach Anspruch 4, **dadurch gekennzeichnet, dass** die separaten Kontaktbleche (26, 27; 64, 65) an den Schmalseiten mit Anschlüssen (26a, 27a; 64a, 65a) zur Stromzuführung versehen sind.

6. Elektrische Heizvorrichtung nach Anspruch 5, **dadurch gekennzeichnet, dass** die separaten Kontaktbleche (64, 65) ohne Versatz zueinander angeordnet sind.

7. Elektrische Heizvorrichtung nach Anspruch 6, **dadurch gekennzeichnet, dass** Strom zu einem der separaten Kontaktbleche (64, 65) über eine Stromzuführung (66), die zwischen Isolatorplatten (70, 71) in einer zweiten Ebene in der Heizvorrichtung angeordnet ist, von einem der elektrischen Anschlüsse (66a) auf der der entsprechenden Kontaktplatte (65) gegenüberliegenden Schmalseite der Heizvorrichtung zugeführt wird.

8. Elektrische Heizvorrichtung nach Anspruch 7, **dadurch gekennzeichnet, dass** zwischen der Ebene mit den PTC-Heizelementen (30, 31) und der zweiten Ebene zumindest ein Radiatorelement (68) vorgesehen ist.

9. Elektrische Heizvorrichtung nach Anspruch 8, **dadurch gekennzeichnet, dass** zusätzlich ein Masse-Kontaktblech (67) zwischen der Ebene mit den PTC-Heizelementen (30, 31) und der zweiten Ebene vorgesehen ist, um Strom beiden Gruppen von PTC-Heizelementen (30, 31) zuzuführen.

10. Elektrische Heizvorrichtung nach Anspruch 5, **dadurch gekennzeichnet, dass** das von den Anschlüssen her gesehen den hinteren PTC-Heizelementen (30,31) zugeordnete Kontaktblech (27) seitlich an dem vorderen Kontaktblech (26) vorbeigeführt ist.

11. Elektrische Heizvorrichtung nach einem der Ansprüche 1 bis 10, **dadurch gekennzeichnet, dass** zumindest die mit den separaten Kontaktblechen (26, 27; 64, 65) in Kontakt stehenden Radiatorelemente (23, 24; 73, 74) zur Stromzuführung zu den separaten Gruppen weiterer PTC-Heizelemente (30, 31) verwendet werden.

12. Elektrische Heizvorrichtung nach einem der Ansprüche 1 bis 11, **gekennzeichnet durch** einen Positionsrahmen (22; 60), der die PTC-Heizelemente (30,31) in einer Ebene in dem geschichteten Aufbau der Heizvorrichtung beabstandet zueinander an vorbestimmten Positionen hält.

13. Elektrische Heizvorrichtung nach Anspruch 12, **dadurch gekennzeichnet, dass** der Positionsrahmen (22; 60) die separaten Kontaktbleche (26, 27; 64, 65) beabstandet zueinander an vorbestimmten Positionen hält.

14. Elektrische Heizvorrichtung nach Anspruch 12 oder 13, **dadurch gekennzeichnet, dass** der Positionsrahmen (22; 60) die separaten Radiatorelemente (23, 24; 73, 74) beabstandet zueinander an vorbestimmten Positionen hält.

15. Elektrische Heizvorrichtung nach Anspruch 13 oder 14, **dadurch gekennzeichnet, dass** der Positionsrahmen (22; 60) eine Mehrzahl von vertikal aus dem Positionsrahmen (22; 60) ragenden Vorsprüngen (28; 69) zur Positionierung der separaten Kontaktbleche (26, 27; 64, 65) und/oder der separaten Radiatorelemente (23, 24; 73, 74) aufweist.

16. Elektrische Heizvorrichtung nach Anspruch 15, **dadurch gekennzeichnet, dass** die Vorsprünge (28) so ausgebildet sind, dass die Radiatorelemente (23, 24) auf den Positionsrahmen (22) aufclipsbar sind.

17. Elektrische Heizvorrichtung nach einem der Ansprüche 1 bis 16, **dadurch gekennzeichnet, dass** die Gruppen von PTC-Heizelementen (30, 31) und/oder die den Gruppen von PTC-Heizelementen (30, 31) jeweils zugeordneten separaten Radiatorelemente (23, 24) jeweils versetzt zueinander angeordnet sind

18. Elektrische Heizvorrichtung nach einem der Ansprüche 1 bis 17, **dadurch gekennzeichnet, dass** jeder separat ansteuerbaren Gruppe von PTC-Heizelementen jeweils eine eigene Steuereinheit zugeordnet ist.

19. Elektrische Heizvorrichtung nach Anspruch 18, **dadurch gekennzeichnet, dass** die Steuereinheiten mit dem geschichteten Aufbau aus PTC-Heizelementen (30, 31), Kontaktblechen (26, 27; 64, 64) und Radiatorelementen (23, 24; 73, 74) eine bauliche Einheit bilden.

20. Elektrische Heizvorrichtung nach einem der Ansprüche 1 bis 19, **dadurch gekennzeichnet, dass** den separaten Kontaktblechen (26, 27; 64, 65) jeweils eine gleiche Anzahl von PTC-Heizelementen (30, 31 ) zugeordnet ist.

21. Elektrische Heizvorrichtung nach einem der Ansprüche 10bis 20, **dadurch gekennzeichnet, dass** dem von den Anschlüssen (26a, 27a) her gesehen hinteren Kontaktblech (27) eine geringere Anzahl von PTC-Heizelementen (31) zugeordnet ist.

22. Elektrische Heizvorrichtung nach einem der Ansprüche 1 bis 21, **gekennzeichnet durch** eine Mehrzahl von geschichtet übereinander angeordneten Heizelementen (20), wobei jedes Heizelement (20) jeweils aus einer Ebene mit separat ansteuerbaren PTC-Heizelementen (30, 31) und diesen zugeordneten Kontaktblechen (26, 27) und Radiatorelementen (23, 24) besteht

23. Elektrische Heizvorrichtung nach einem der Ansprüche 1 bis 22, **dadurch gekennzeichnet, dass** der geschichtete Aufbau aus PTC-Heizelementen (30, 31), Radiatorelementen (23, 24; 73, 74) und Kontaktblechen (26, 27; 64, 65) in einem Gehäuse oder einem rechteckigen Rahmen (3, 4, 5) geklemmt gehalten sind.

24. Elektrische Heizvorrichtung nach einem der Ansprüche 1 bis 23, **dadurch gekennzeichnet, dass** über die separate Ansteuerbarkeit der Gruppen von PTC-Heizelementen (30, 31) einer Ebene jeweils nebeneinander liegende, separate Heizzonen (40, 43; 52, 54) der Heizvorrichtung gebildet werden.

25. Elektrische Heizvorrichtung nach Anspruch 24, **dadurch gekennzeichnet, dass** eine Heizzone (40-45) aus einer Mehrzahl geschichtet übereinander angeordneter Heizelemente (20) gebildet ist.

26. Kraftfahrzeugklimagerät mit einer elektrischen Heizvorrichtung nach einem der Ansprüche 1 bis 25.

## Claims

1. An electric heating device, in particular for use as an auxiliary electric heating for motor vehicles, comprising a plurality of PTC heating elements (30, 31) arranged in a plane in said heating device, at least one radiator element (23, 24; 68, 73, 74, 75) and contact sheets (26, 27; 64, 65) for contacting the PTC heating elements (30, 31), wherein said PTC heating elements (30, 31) are separately controllable in at least two groups
**characterized by**
a separate contact sheet (26, 27; 64, 65) for supplying current for each group of said separately controllable PTC heating elements,
wherein electric connections (26a, 27a; 64a, 66a) are arranged on the same side of the heating device for applying current to the separate contact sheets (26, 27; 64, 65).

2. An electric heating device according to claim 1, **characterized in that** each of said separately controllable groups of PTC heating elements (30, 31) has associated therewith at least one separate radiator element (23, 24; 73, 74).

3. An electric heating device according to claim 1 or 2, **characterized in that** said separately controllable groups of PTC heating elements (30, 31) are connected via a common contact sheet (25) to the positive pole or to ground.

4. An electric heating device according to any of claims 1 to 3, **characterized in that** said separate contact sheets (26, 27; 64, 65) for controlling said PTC heating elements (30, 31) are arranged in spaced relationship with one another in one plane.

5. An electric heating device according to claim 4, **characterized in that** the narrow sides of said separate contact sheets (26, 27; 64, 65) are provided with connections (26a, 27a; 64a, 66a) for supplying current.

6. An electric heating device according to claim 5, **characterized in that** said separate contact sheets (64, 65) are arranged such that they are not displaced relative to one another.

7. An electric heating device according to claim 6, **characterized in that** via a current supply means (66) arranged between insulating plates (70, 71) in a second plane in said heating device, current is supplied to one of the separate contact sheets (64, 65) from a connection (66a) on the narrow side of said heating device, said narrow side being located opposite to said respective contact sheet (65).

8. An electric heating device according to claim 7, **characterized in that** a radiator element (68) is provided between the plane comprising said PTC heating elements (30, 31) and said second plane.

9. An electric heating device according to claim 8, **characterized in that**, between said plane comprising the PTC heating elements (30, 31) and said second plane, a ground contact sheet (67) is additionally provided for supplying current to both groups of PTC heating elements (30, 31).

10. An electric heating device according to claim 5, **characterized in that** said contact sheet (27) which is associated with the rear PTC heating elements (30, 31) when seen from the connections, extends laterally relative to the front contact sheet (26).

11. An electric heating device according to any of claims 1 to 10, wherein at least said radiator elements (23, 24; 73, 74) which are in contact with said separate contact sheets (26, 27; 64, 65) are used for supplying current to said separate groups of additional PTC heating elements (30, 31).

12. An electric heating device according to any of claims 1 to 11, **characterized by** a positioning frame (22; 60) which holds said PTC heating elements (30, 31) in a plane in the layered structure of said heating device in spaced relationship with one another at predetermined positions.

13. An electric heating device according to claim 12, **characterized in that** said positioning frame (22; 60) holds said separate contact sheets (26, 27; 64, 65) in spaced relationship with one another at predetermined positions.

14. An electric heating device according to claim 12 or 13, **characterized in that** said positioning frame (22; 60) holds said separate radiator elements (23, 24; 73, 74) in spaced relationship with one another at predetermined positions.

15. An electric heating device according to claim 13 or 14, **characterized in that** said positioning frame (22; 60) is provided with a plurality of projections (28; 69) which project vertically beyond said positioning frame (22; 60) and which are used for positioning said separate contact sheets (26, 27; 64, 65) and/or said separate radiator elements (23, 24; 73, 74).

16. An electric heating device according to claim 15, **characterized in that** said projections (28) are implemented such that said radiator elements (23, 24) are adapted to be clipped onto said positioning frame (22).

17. An electric heating device according to any of claims 1 to 16, **characterized in that** said groups of PTC heating elements (30, 31) and/or said separate radiator elements (23, 24) associated with said groups of PTC heating elements (30, 31) are arranged such that they are displaced relative to one another respectively.

18. An electric heating device according to any of claims 1 to 17, **characterized in that** a separate control unit is associated with each separately controllable group of PTC heating elements.

19. An electric heating device according to claim 18, **characterized in that** said control units form a structural unit with the layered structure comprising PTC heating elements (30, 31), contact sheets (26, 27; 64, 65) and radiator elements (23, 24; 73, 74).

20. An electric heating device according to any of claims 1 to 19, **characterized in that** said respective separate contact sheets (26, 27; 64, 65) have associated therewith identical numbers of PTC heating elements (30, 31).

21. An electric heating device according to any of claims 10 to 20, **characterized in that** said contact sheet (27) constituting the rear contact sheet when seen from the connections (26a, 27a) has associated therewith a smaller number of PTC heating elements (31).

22. An electric heating device according to any of claims 1 to 21, comprising a plurality of heating elements (20) which are arranged one on top of the other in a layered structure, each of said heating elements (20) comprising a plane of separately controllable PTC heating elements (30, 31) and contact sheets (26, 27) associated with said PTC heating elements (30, 31) as well as radiator elements (23, 24).

23. An electric heating device according to any of claims 1 to 22, **characterized in that** said layered structure of PTC heating elements (30, 31), radiator elements (23, 24; 73, 74) and contact sheets (26, 27; 64, 65) is clampingly fixed in a housing or in a rectangular frame (3, 4, 5).

24. An electric heating device according to any of claims 1 to 23, **characterized in that** through said separate controllability of said groups of PTC heating elements (30, 31) of a plane, respective juxtaposed, separate heating zones (40, 43; 52, 54) of the heating device are formed.

25. An electric heating device according to claim 24, **characterized in that** a heating zone (40-45) is formed of a plurality of heating elements (20) which are arranged one on top of the other in a layered structure.

26. An air conditioning unit for a motor vehicle, comprising an electric heating device according to any of claims 1 to 25.

## Revendications

1. Appareil de chauffage électrique, en particulier en tant que chauffage électrique additionnel pour véhicules automobiles, comprenant une pluralité d'éléments de chauffage CTP (30, 31), qui sont disposés sur un même plan dans l'appareil de chauffage, au moins un élément de radiateur (23, 24 ; 68, 73, 74, 75) et des tôles de contact (26, 27 ; 64, 65) pour mettre en contact les éléments de chauffage CTP (30, 31), les éléments de chauffage CTP (30, 31) pouvant être mis sous tension séparément en au moins deux groupes, **caractérisé par** une tôle de contact (26, 27 ; 64, 65) séparée pour chaque groupe des éléments de chauffage CTP (30, 31) pouvant être mis sous tension séparément, destinée à amener le courant, des connecteurs électriques (26a, 27a ; 64a, 66a) étant disposés chacun sur le même côté de l'appareil de chauffage pour amener le courant vers les tôles de contact (26, 27 ; 64, 65) séparées.

2. Appareil de chauffage électrique selon la revendication 1, **caractérisé en ce qu'**à chacun des groupes d'éléments de chauffage CTP (30, 31) pouvant être mis sous tension séparément, correspond au moins un élément de radiateur (23, 24 ; 73, 74) séparé.

3. Appareil de chauffage électrique selon la revendication 1 ou 2, **caractérisé en ce que** les groupes d'éléments de chauffage CTP (30, 31) pouvant être mis sous tension séparément sont reliés au pôle positif ou à la masse par l'intermédiaire d'une tôle de contact (25) commune.

4. Appareil de chauffage électrique selon l'une quelconque des revendications 1 à 3, **caractérisé en ce que** les tôles de contact (26, 27 ; 64, 65) séparées sont disposées à distance les unes des autres sur un même plan pour la mise sous tension des éléments de chauffage CTP (30, 31).

5. Appareil de chauffage électrique selon la revendication 4, **caractérisé en ce que** les tôles de contact (26, 27 ; 64, 65) séparées sont pourvues, sur leur tranche, de connecteurs (26a, 27a ; 64a, 65a) pour amener le courant.

6. Appareil de chauffage électrique selon la revendication 5, **caractérisé en ce que** les tôles de contact (26, 27 ; 64, 65) séparées sont alignées.

7. Appareil de chauffage électrique selon la revendication 6, **caractérisé en ce que** le courant est amené depuis l'un des connecteurs électriques (66a) situé sur la tranche opposée à la tôle de contact (65) correspondante de l'appareil de chauffage vers l'une des tôles de contact (64, 65) séparées par l'intermédiaire d'un conducteur d'alimentation (66) qui est disposé entre des plaques isolantes (70, 71) sur un deuxième plan de l'appareil de chauffage.

8. Appareil de chauffage électrique selon la revendication 7, **caractérisé en ce qu'**au moins un élément de radiateur (68) est prévu entre le plan comprenant les éléments de chauffage CTP (30, 31) et le deuxième plan.

9. Appareil de chauffage électrique selon la revendication 8, **caractérisé en ce qu'**une tôle de contact reliée à la masse (67) est prévue en plus entre le plan comprenant les éléments de chauffage CTP (30, 31) et le deuxième plan afin d'amener le courant vers les deux groupes d'éléments de chauffage CTP (30, 31).

10. Appareil de chauffage électrique selon la revendication 5, **caractérisé en ce que**, vu depuis le côté des connecteurs, la tôle de contact (27) conjuguée aux éléments de chauffage CTP (30, 31) arrière longe la tôle de contact avant (26).

11. Appareil de chauffage électrique selon l'une quelconque des revendications 1 à 10, **caractérisé en ce qu'**au moins les éléments de radiateur (23, 24 ; 73, 74) en contact avec les tôles de contact (26, 27 ; 64, 65) séparées sont utilisés pour amener le courant vers les groupes séparés d'autres éléments de chauffage CTP (30, 31).

12. Appareil de chauffage électrique selon l'une quelconque des revendications 1 à 11, **caractérisé par** un cadre de positionnement (22 ; 60) qui maintient les éléments de chauffage CTP (30, 31) à distance les uns des autres dans des positions prédéterminées sur un même plan dans la structure multicouche de l'appareil de chauffage.

13. Appareil de chauffage électrique selon la revendication 12, **caractérisé en ce que** le cadre de positionnement (22 ; 60) maintient les tôles de contact (26, 27 ; 64, 65) séparées à distance les unes des autres dans des positions prédéterminées.

14. Appareil de chauffage électrique selon la revendication 12 ou 13, **caractérisé en ce que** le cadre de positionnement (22 ; 60) maintient les éléments de radiateur (23, 24 ; 73, 74) séparés à distance les uns des autres dans des positions prédéterminées.

15. Appareil de chauffage électrique selon la revendication 13 ou 14, **caractérisé en ce que** le cadre de positionnement (22 ; 60) présente une pluralité de saillies (28 ; 69), dépassant verticalement du cadre de positionnement (22 ; 60), pour positionner les tôles de contact (26, 27 ; 64, 65) séparées et/ou les éléments de radiateur (23, 24 ; 73, 74) séparés.

16. Appareil de chauffage électrique selon la revendication 15, **caractérisé en ce que** les saillies (28) sont conçues de manière à ce que les éléments de radiateur (23, 24) puissent être encliquetés sur le cadre de positionnement (22).

17. Appareil de chauffage électrique selon l'une quelconque des revendications 1 à 16, **caractérisé en ce que** les groupes d'éléments de chauffage CTP (30, 31) et/ou les éléments de radiateur (23, 24) séparés correspondants aux groupes d'éléments de chauffage CTP (30, 31) sont disposés en quinconce.

18. Appareil de chauffage électrique selon l'une quelconque des revendications 1 à 17, **caractérisé en ce qu'**à chaque groupe d'éléments de chauffage CTP pouvant être mis sous tension séparément, correspond une unité de commande propre.

19. Appareil de chauffage électrique selon la revendication 18, **caractérisé en ce que** les unités de commande forment une unité structurelle avec la structure multicouche formée des éléments de chauffage CTP (30, 31), des tôles de contact (26, 27 ; 64, 65) et des éléments de radiateur (23, 24 ; 73, 74).

20. Appareil de chauffage électrique selon l'une quelconque des revendications 1 à 19, **caractérisé en ce qu'**aux tôles de contact (26, 27 ; 64, 65) séparées correspond à chaque fois un même nombre d'éléments de chauffage CTP (30, 31).

21. Appareil de chauffage électrique selon l'une quelconque des revendications 10 à 20, **caractérisé en ce que**, vu depuis les connecteurs (26a, 27a), un nombre inférieur d'éléments de chauffage CTP (30, 31) est conjugué à la tôle de contact (27) arrière.

22. Appareil de chauffage électrique selon l'une quelconque des revendications 1 à 21, **caractérisé par** une pluralité d'éléments de chauffage (20) empilés les uns sur les autres, chaque élément de chauffage (20) étant composé d'un plan comprenant des éléments de chauffage CTP (30, 31) pouvant être mis sous tension séparément et de tôles de contact (26, 27) ainsi que d'éléments de radiateur (23, 24) conjugués à ceux-ci.

23. Appareil de chauffage électrique selon l'une quelconque des revendications 1 à 22, **caractérisé en ce que** la structure multicouche formée d'éléments de chauffage CTP (30, 31), d'éléments de radiateur (23, 24 ; 73, 74) et de tôles de contact (26, 27 ; 64, 65) est immobilisée dans un boîtier ou dans un cadre rectangulaire (3, 4, 5).

24. Appareil de chauffage électrique selon l'une quelconque des revendications 1 à 23, **caractérisé en ce que** des zones de chauffage (40, 43 ; 52, 54) séparées de l'appareil de chauffage, disposées les unes à côté des autres, sont formées grâce à la mise sous tension séparée des groupes d'éléments de chauffage CTP (30, 31) d'un même plan.

25. Appareil de chauffage électrique selon la revendication 24, **caractérisé en ce qu'**une zone de chauffage (40 à 45) est formée d'une pluralité d'éléments de chauffage (20) empilés les uns sur les autres.

26. Appareil de climatisation pour véhicules automobiles comprenant un appareil de chauffage électrique selon l'une quelconque des revendications 1 à 25.
